# EUROPEAN PATENT SPECIFICATION

(11) **EP 3 184 533 B1**
(45) Date of publication and mention of the grant of the patent: **01.09.2021**
(21) Application number: 15202020.2
(22) Date of filing: 22.12.2015
(51) Int. Cl.: C07F 15/00

(54) **METHOD OF PREPARING A METAL COMPLEX**
VERFAHREN ZUR HERSTELLUNG EINES METALLKOMPLEXES
PROCÉDÉ DE PRÉPARATION D'UN COMPLEXE MÉTALLIQUE

(43) Date of publication of application: 28.06.2017
(73) Proprietor: ARKEMA B.V., 3196 Ke Vondelingenplaat-Rotterdam (NL)
(72) Inventor: DEELMAN, Berth Jan, 4421 DW KAPELLE (NL); DE PATER, Jeroen, 3311 DH Dordrecht (NL); SAMAN, Evert J., 4301 GN Zierikzee (NL)
(74) Representative: Arkema Patent

(56) References cited:
- TETSUAKI FUJIHARA ET AL: "Copper-Catalyzed Hydrosilylation with a Bowl-Shaped Phosphane Ligand: Preferential Reduction of a Bulky Ketone in the Presence of an Aldehyde", ANGEWANDTE CHEMIE INTERNATIONAL EDITION, vol. 49, no. 8, 15 February 2010 (2010-02-15), pages 1472-1476, XP55274976, DE ISSN: 1433-7851, DOI: 10.1002/anie.200906348
- OLIVIER CLOT ET AL: "Electropolymerization of Pd(II) Complexes Containing Phosphinoterthiophene Ligands", JOURNAL OF THE AMERICAN CHEMICAL SOCIETY, vol. 123, no. 41, 1 October 2001 (2001-10-01), pages 9963-9973, XP55274822, US ISSN: 0002-7863, DOI: 10.1021/ja016465m
- WALTER BARATTA ET AL: "A convenient preparation of dinuclear Pt(II) phosphine complexes", INORGANICA CHIMICA ACTA, vol. 209, no. 1, 1 July 1993 (1993-07-01), pages 85-87, XP55274727, NL ISSN: 0020-1693, DOI: 10.1016/S0020-1693(00)84984-1
- None

## Description

### [Field of the invention]

The present invention relates to a process for preparing dimeric platinum metal complexes with triarylphosphine ligands.

### [Technical problem]

Dimeric transition metal complexes especially halogen bridged platinum are useful starting materials in the chemistry of transition metals and especially of platinum.

The halogen bridge and especially a chloro bridge of the dimeric transition metal complexes can undergo cleavage by nucleophiles, which allows the formation of a wide range of mononuclear transition metal derivatives or mononuclear platinum derivatives.

Furthermore the dimeric transition metal complexes and especially halogen bridged platinum ones can be used as precursor of catalysts or catalysts itself in chemical reactions.

Usually the dimeric transition metal complexes and especially the platinum ones are obtained from relatively expensive raw materials or require an excess of the raw materials.

Additionally these kind of processes usually have a low yield. Latter point in combination with costly raw materials, make the processes industrially not that interesting.

The objective of the present invention is to propose an improved process that produces dimeric transition metal complexes.

An additional objective of the present invention is to propose a process that produces dimeric transition metal complexes in high yield.

It is also disclosed dimeric transition metal complexes and a method for making them.

Still another objective of the present invention is a method for manufacturing a dimeric transition metal complexes with a yield of more than 85%.

### [BACKGROUND OF THE INVENTION]Prior art

Platinum complexes of the type [Pt(µ-Cl)Cl(PR₃)]₂ (R = alkyl, cycloalkyl, aryl, alkoxy, aryloxy) are well known in the literature. Several different synthetic methods have been reported for these type of complexes. Their synthesis, however, suffers from the formation of by-products resulting in less than desirable yields.

The earliest method mentioned concerns the reaction between [PtCl₂] and melted [PtCl₂(PR₃)₂] complexes (Chatt, J., J. Chem. Soc. 1951, 652; Chatt, J.; Venanzi, L. M., J. Chem. Soc. 1955, 2787) and was initially developed for trialkylphosphines. Later reports focussed on the application of different solvents (xylene/naphthalene, 1,1,2,2-tetrachloroethane, *ortho-*dichlorobenzene) for the reaction and expanding the scope to include triarylphosphines (Goodfellow, R.J.; Venanzi, L. M., J. Chem. Soc. 1965, 7533; Smithies, A. C.; Rycheck, M..; Orchin, M.; J. Organometal. Chem. 1968, 12, 199; Briggs, J. R.; Crocker, C.; Shaw, B. L., Inorg. Chim. Acta 1980, 245). Yields vary depending on the precise conditions but are generally between 50-80 %, employing an excess of PtCl₂ (1.05-1.20 equivalents).

Another method is to directly react PtCl₂ (1.15-1.2 equivalent) with 1 equivalent of PR₃ in para-chlorotoluene (Baratta, W.: Pregosin, P. S.; Inorg. Chim. Acta 1993, 209, 85). For PR₃ = PPh₃ and P(C₆H₄Me-4)₃ yields were 85 and 70 %, respectively.

Also known is the synthesis of [Pt(µ-Cl)Cl(PCy₃)]₂ (Cy = cyclohexyl) by slowly adding PCy₃ to an acetone solution of [K] [PtCl₃(C₂H₄)] (Anderson, G. K.; Clark, H. C.; Davies, J. A.; Inorg. Chem. 1981, 20 (3), 944). This method is only applicable for sterically demanding ligands and failed for PPh₃.

More recently it was reported that one can start from [Pt(µ-Cl)Cl(C₂H₄)]₂ and a stoichiometric amount of ligand (on platinum) to obtain the desired [Pt(µ-Cl)Cl(PR₃)]₂ complexes (Boag, N. M.; Ravetz, M. S.; J. Chem. Soc., Dalton Trans. 1995, 3473). Depending on the exact ligand yields ranged from 58-87 %, for e.g. PR₃ = PPh₃ a yield on Pt of 80 % was reported.

In 2012 the use of [PtCl₂(PPh₃)(R'CN)] complexes (R' = methyl or ethyl) as precursors to obtain [Pt(µ-Cl)Cl(PPh₃)]₂ was described (Dell'Amico, D. B.; Labella, L.; Marchetti, F.; Samaritani, S.; Dalton Trans. 2012, 41, 1389). The highest overall yield (on Pt) for this two-step process was 63%, when starting from R' = methyl.

All the procedures described above generally suffer from poor yields (50 to 85 %) that are less than desirable, require an excess of expensive PtCl₂ or use other more expensive platinum raw materials such as [K][PtCl₃(C₂H₄)], [Pt(µ-Cl)Cl(C₂H₄)]₂ or [PtCl₂(PPh₃)(R'CN].

### [Brief description of the invention]

Surprisingly it has been found that process for the synthesis of dimeric transition metal complexes comprising the steps of
a) mixing a transition metal(II) salt with a ligand L in an organic solvent and
b)keeping the mixture at a temperature between 110°C and 150°C for a time of at least 10 hours in said organic solvent
characterized that the mixture prepared in step a) comprises a nitrile compound and that the transition metal is chosen from Nickel (Ni), Palladium (Pd) and/or Platinum (Pt); and that the ligand L is chosen from a monodentate organic phosphine ligand having following formula: 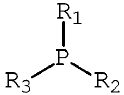 wherein R1, R2 and R3 are aryl groups or substituted aryl groups, has a yield of more than 85% in terms of the transition metal.

It is also disclosed that dimeric transition metal complexes can be obtained by saidprocess.

It is also disclosed that a dimeric transition metal complexes obtained by said process, can be used as precatalyst or catalysts.

It is also disclosed that a dimeric transition metal complexes comprising a monodentate phosphorus ligand (L) having poly substituted aryl groups, said dimeric transition metal complexes could be obtained by said process.

### [Detailed description of the invention]

The present invention relates to a process according to claim 1.

By the term "high yield" as used is denoted a chemical reaction that transforms a raw material compound into another chemical compound, wherein at least 80% of the theoretical obtainable other chemical compound are obtained based on the quantity of the used raw material compound.

By the term "reaction time" as used is denoted the time that the transition metal (II) salt with a ligand L in presence of a nitrile are together in an organic solvent at a temperature between 110°C and 150°C.

The process according to the invention comprises a first step a) mixing a transition metal(II) salt with a ligand L in an organic solvent characterized that the mixture prepared in step a) comprises a nitrile compound, and that the transition metal is chosen from Nickel (Ni), Palladium (Pd) and/or Platinum (Pt); and that the ligand L is chosen from a monodentate organic phosphine ligand having following formula: 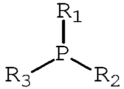 wherein R1, R2 and R3 are aryl groups or substituted aryl groups. The order of adding nitrile compound is of no importance. The nitrile compound can be mixed with the organic solvent before the transition metal(II) salt is added or the nitrile compound can be mixed with the organic solvent after the transition metal(II) salt is added.

It is important for the process according to the invention that the mixture comprises the three components at step b).

**With regard to the transition metal(II) salt according to the invention,** it has the general formula [MXY] or [MZ] with transition metal M and monovalent anions X and Y or a bivalent anion Z. In a preferred embodiment it has the general formula [MX₂]. The transition metal M is a transition metal chosen from group 10 of the periodic table of elements according to the IUPAC naming system and and is chosen from Nickel (Ni), Palladium (Pd) and/or Platinum (Pt). Most preferably the transition metal M is platinum.

X is preferably chosen from an anion of the conjugate base of an organic or inorganic acid. More preferably X is chosen to be Cl, Br, or I.

**With regard to the transition metal complex according to the invention,** it has the general formula (1): 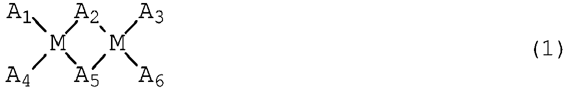 wherein M is the transition metal and A₁ to A₆ are ligands.

M is a metal selected from group 10 of the periodic table of elements according to the IUPAC naming system and is chosen from Nickel (Ni), Palladium (Pd) and/or Platinum (Pt). Most preferably the transition metal M is platinum.

The ligands A2 and A5 in formula (1) which form the bridge between the two transition metals M of the dimeric transition metal complex are preferably chosen from an anion of the conjugate base of an organic or inorganic acid. More preferably the ligands A2 or A5 are chosen to be Cl, Br, or I.

At least one of the ligands A1 or A4 and A3 or A6 in formula (1) is preferably chosen from an anion of the conjugate base of an organic or inorganic acid. More preferably one of ligands A1 or A4 and A3 or A6 is chosen to be Cl, Br or I anions.

At least one of the ligands A1 or A4 and A3 or A6 is a monodentate phosphorus ligand.

More preferably at least one of the ligands A1 or A4 and A3 or A6 is a monodentate organic phosphine ligand.

In a preferred embodiment the transition metal complex has general formula (2)

[M(µ-X)X(L)]₂ (2)

wherein M is the transition metal as defined above, L is a monodentate phosphorus ligand and X is the anion of the conjugate base of an organic or inorganic acid.

The general formula (2) corresponds to structures (3) or (4):

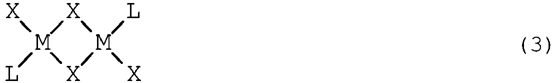

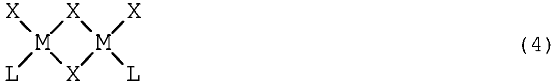

The transition metal M is a metal selected from group 10 of the periodic table of elements according to the IUPAC naming system and and is chosen from Nickel (Ni), Palladium (Pd) and/or Platinum (Pt). Most preferably the transition metal M is platinum.

The ligands X in formula (2), (3) or (4) which form the bridge between the two transition metals M of the dimeric transition metal complex are preferably chosen from an anion of the conjugate base of an organic or inorganic acid. More preferably the ligands X are chosen to be Cl, Br or I anions.

The ligand L is a monodentate phosphorus ligand and more preferably the ligand L is a monodentate organic phosphine ligand.

The ligand L which is a monodentate organic phosphine ligand has following formula:

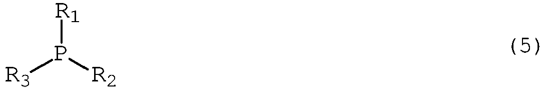

wherein R₁, R₂ and R₃ are organic groups which can be the same or different, wherein R₁, R₂ and R₃ in formula (5) are aryl groups or substituted aryl groups. The substituted aryl groups can have one or more substituents.

. For R₁, R₂, R₃ = Ar such aryl groups Ar are chosen from phenyl, (cyclo)alkyl-substituted aryl groups, alkoxy-substituted aryl groups, mixed alkyl-/alkoxy-subsitituted aryl groups and (optionally substituted) aryl-substituted aryl groups. Each aryl group Ar can be optionally mono-substituted, for instance at the 3-or 4-position, or poly-substituted, e.g. at the 3- & 4-, 3- & 5- or the 3-, 4- and 5-positions.

In a first particular embodiment of this invention such aryl groups Ar are phenyl, 4-tolyl and 3,5-xylyl.

In a second particular preferred embodiment of this invention such aryl groups of the ligand are poly-substituted and preferably 3- & 5- substituted aryl groups.

**Preferably the process according to the invention** has following general reaction scheme

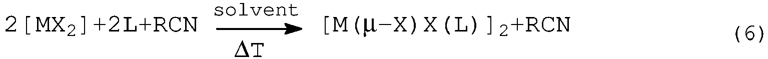

wherein M is the transition metal, L is a monodentate phosphorus ligand, R is an organic group and X is the anion of the conjugate base of an organic or inorganic acid.

More preferably the process according to the invention has following general reaction scheme 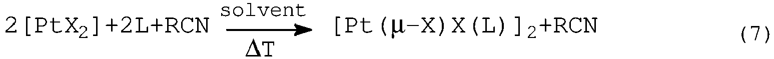 wherein L is a monodentate phosphorus ligand and X is the anion of the conjugate base of an organic or inorganic acid.

In principal equimolar amounts of [MX₂] or [PtX₂] and the ligand L or an excess of either one of the reagents can be used in schemes (6) or (7).

In a preferred embodiment a slight excess of the ligand L is preferred to ensure that all the transition metal M or platinum halide is consumed. The molar ratio of the ligand L towards the metal or platinum is between 1 and 1.2, preferably between 1 and 1.1 and more preferably between 1 and 1.05.

The nitrile compound according to the process of the invention is preferably an organic nitrile compound with the general formula RCN. R is an alkyl, cycloalkyl or aryl group or a substituted alkyl, cycloalky or aryl group. Preferably R consists to 80wt% out of carbon and hydrogen atoms.

The organic nitrile compound can be chosen from linear alkyl nitriles having as R a C1 up to C12 linear alkyl chains as for example ethanenitrile (CH₃CN = MeCN), propanenitril (CH₃CH₂CN), butanenitrile (CH₃CH₂CH₂CN) and so on.

The organic nitrile compound can be chosen from branched alkyl nitriles having as R a C1 up to C12 as for example 2-methyl-1-propanenitrile.

The organic nitrile compound can be chosen from cyclic alkyl nitriles having as R a C1 up to C12 as for example cyclopentanecarbonnitrile.

The organic nitrile compound can be chosen from aryl nitriles as for example benzonitrile or 2-methoxybenzonitrile.

The amount of RCN to be used in the process according to the invention is between 0.8 to 10 molar equivalents on M or Pt and preferably 0.8 to 5 equivalents on M or Pt.

The solvent of the process according to the invention is a high boiling organic solvent. By high boiling are meant organic liquids that have a boiling point of at least 110°C preferably 120°C and more preferably at least 130°C.

The solvent of the process according to the invention is liquid at ambient temperature. By ambient temperature is meant 25°C. The solvent of the process according to the invention has a melting point of at most 20°C, preferably at most 15°C, more preferably at most 10°C.

As solvents we can use high-boiling organic solvents such as 1,1,2,2-tetrachloroethane, xylenes, monochlorobenzene or terpentina 140-200. The latter is a mixture of high-boiling alkanes. A high-boiling solvent is required for the reaction to proceed and to obtain high yields.

The reaction time of the process according to the invention is at least 10 hours, preferably at least 12 hours, more preferably at least 14 hours, still more preferably at least 16 hours, advantageously at least 18 hours and more advantageously at least 20 hours.

The reaction time of the process according to the invention has in principle no upper limit. Longer reaction times lead to higher conversion and yield. However for industrially reasons the reaction time of the process according to the invention is limited to at most 48 hours, which gives a satisfying conversion and yield. Preferably the reaction time is at most 40 hours, more preferably at most 35 hours, advantageously at most 30 hours and most advantageously at most 24 hours.

According to the invention the reaction time is in the order of 10 to 48 hours, preferably between 12 and 40 hours, still more preferably between 15 and 30 hours and most advantageously between 20 and 24 hours.

The temperature of the process according to the invention is between 110°C and 150°C, preferably between 120°C and 149°C, more preferably between 135°C and 148°C, still more preferably between 130°C and 147°C, advantageously between 135°C and 146°C and most advantageously between 140°C and 145°C.

According to the process of the invention, the desired product can be isolated by several different methods. One of the possibilities is that all volatiles are stripped from the reaction mixture under reduced pressure, followed by addition of a chlorinated solvent (such as dichloromethane) to dissolve the dimeric platinum complex, filtration and precipitation of the product by addition of an alkane such as pentane or heptane. Another possibility is to cool down the reaction mixture and filter off the precipitated product followed by washing with a suitable solvent.

The yields based on the transition metal according to the process of the invention are in the range of 80% to 100% and preferably between 85% up to 100%.

The Platinum yields according to the process of the invention for the desired complex are in the range of 80% to 100%, depending on the exact ligand L used. Preferably the yield of the process according to the invention is between 85% and 100%, more preferably between 87% and 99.9%, even more preferably between 90% and 99.5%.

The transition metal complex obtained according to the process of the invention can be used as a precatalyst or catalyst.

For example the transition metal complex obtained according to the process of the invention can be used as catalyst in a process for the production of monoalkyltin trihalides involving a redistribution reaction between tetraalkyltins, trialkyltin halides dialkyltin dihalides or mixtures thereof and tin tetrahalides.

### [Methods of evaluation]

Yield: the yield is estimated by weighing the final product and subsequent ³¹P- and ¹H-NMR analyses as well as obtaining the correct elemental analyses to confirm the identity of the compound and ensure that no significant amounts of impurities are present.

### [Examples]

### Comparative example : Preparation of [Pt(µ-Cl)(Cl)(P(C₆H₃Me₂-3,5)₃)]₂

In this experiment PtCl₂ (0.50 gram, 1.8798 mmol) and P(C₆H₃Me₂-3,5)₃ (0.671 gram, 1.9174 mmol) were reacted in xylenes (10 mL) at 100 °C for 20 hours followed by 6 hours at 150 °C. After cooling to ambient temperature the reaction mixture was filtered and the solid filter residue was washed with xylenes and dried in vacuo. The desired product was obtained as a brown solid (0.930 gram, 95 % purity, 77 % yield on [Pt]).

Several examples of the type [Pt (µ-Cl)Cl(L)]₂ are prepared with the process according to the invention.

### Example 1: Preparation of [Pt(µ-Cl)(Cl)(PPh₃)]₂

PtCl₂ (0.72 gram, 2.71 mmol) and PPh₃ (0.72 gram, 2.75 mmol) were reacted in a mixture of xylenes (16 mL) and MeCN (0.11 gram, 2.45 mmol) at 140 °C while stirring for 22 hours. After cooling to ambient temperature the reaction mixture was filtered over a glass-sintered filter. The solid residue was washed with heptane (14 mL) and dried at 50 °C for 4 hours. The product was obtained as an orange-brown solid (1.42 gram, 1.34 mmol, 99 % yield on [Pt]).

### Example 2: Preparation of [Pt(µ-Cl)(Cl)(P(C₆H₄Me-4)₃)]₂

For the preparation of this compound PtCl₂ (0.68 gram, 2.56 mmol) and P(C₆H₄Me-4)₃ (0.80 gram, 2.63 mmol) were reacted in a mixture of xylenes (15 mL) and MeCN (0.11 gram, 2.45 mmol) at 140 °C while stirring for 22 hours. After cooling to ambient temperature the reaction mixture was filtered over a glass-sintered filter. The solid residue was washed with heptane (10 mL) and dried at 50 °C for 4 hours. The product was obtained as a yellow-orange solid (1.36 gram, 1.19 mmol, 93 % yield on [Pt]).

### Example 3: Preparation of [Pt (µ-Cl)(Cl)(P (C₆H₃Me₂-3,5)₃)]₂

PtCl₂ (600 mg, 2.26 mmol) and P(C₆H₃Me-3,5)₃ (807 mg, 2.31 mmol) were reacted in a mixture of xylenes (14 mL) and MeCN (92.8 mg, 2.26 mmol) at 140 °C for 20 hours. After cooling to ambient temperature all volatiles were evaporated under reduced pressure. The solid residue was extracted with heptane (15 mL) and dichloromethane (5 mL), the washings combined and evaporated to dryness. The desired product was obtained as an orange solid (1.20 gram, 87 % yield on [Pt]).

## Claims

1. A process for the synthesis of dimeric transition metal complexes comprising the steps of
a) mixing a transition metal(II) salt with a ligand L in an organic solvent and
b) keeping the mixture at a temperature between 110°C and 150°C for at time of at least 10 hours in said organic solvent
characterized that the mixture prepared in step a) comprises a nitrile compound; and that the transition metal is chosen from Nickel (Ni), Palladium (Pd) and/or Platinum (Pt); and that the ligand L is chosen from a monodentate organic phosphine ligand having following formula: 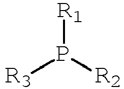 wherein R₁, R₂ and R₃ are aryl groups or substituted aryl groups.

2. The process according to claim 1 characterized that the transition metal(II) salt has the general formula [MX2], wherein M is the transition metal and X is preferably chosen from an anion of the conjugate base of an organic or inorganic acid

3. The process according to claim 1 or 2 characterized that the dimeric metal complex has the general formula (1) 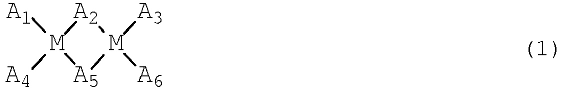 wherein M is the transition metal and A₁ to A6 are ligands.

4. The process according to claim 1 or 2 characterized that the dimeric metal complex has the general formula (2)
[M(µ-X)X(L)]₂ (2)
wherein M is the transition metal, L is a monodentate phosphorus ligand and X is the anion of the conjugate base of an organic or inorganic acid.

5. The process according to any of claims 1 to 4 characterized that the transition metal is platinum.

6. The process according to any of claims 1 to 5 characterized that the organic groups R₁, R₂ and R₃ of the monodentate organic phosphine ligand L are substituted aryl groups.

7. The process according to any of claims 1 to 6 characterized that the organic groups R₁, R₂ and R₃ of the monodentate organic phosphine ligand L are aryl groups Ar that are chosen from phenyl, (cyclo)alkyl-substituted aryl groups, alkoxy-substituted aryl groups, mixed alkyl-/alkoxy-subsitituted aryl groups.

8. The process according to claim 7 characterized that R₁, R₂ and R₃ are aryl groups Ar chosen from phenyl, 4-tolyl and 3,5-xylyl or poly-substituted and preferably 3- & 5- substituted aryl groups.

9. The process according to any of claims 1 to 8 characterized that the nitrile compound is an organic nitrile compound RCN.

10. The process according to any of claims 1 to 9 characterized that the organic solvent has a boiling point of at least 105°C.

11. The process according to any of claims 1 to 10 characterized that the solvent is chosen from 1,1,2,2-tetrachloroethane, xylenes, monochlorobenzene or terpentina 140-200.

12. The process according to any of claims 1 to 11 characterized that the time in step b) is between 12 hours and 40 hours.

13. The process according to any of claims 1 to 12 characterized that the temperature in step b) is kept between 120°C and 150°C.

## Patentansprüche

1. Verfahren zur Synthese von dimeren Übergangsmetallkomplexen, das die folgenden Schritte umfasst:
a) Mischen eines Übergangsmetall(II)salzes mit einem Liganden L in einem organischen Lösungsmittel und
b) Halten der Mischung bei einer Temperatur zwischen 110 °C und 150 °C für einen Zeitraum von mindestens 10 Stunden in dem organischen Lösungsmittel,
**dadurch gekennzeichnet, dass** die in Schritt a) hergestellte Mischung eine Nitrilverbindung umfasst; und dass das Übergangsmetall aus Nickel (Ni), Palladium (Pd) und/oder Platin (Pt) ausgewählt ist; und dass der Ligand L aus einem einzähnigen organischen Phosphinliganden mit der folgenden Formel ausgewählt ist: 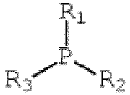 wobei R₁, R₂ und R₃ für Arylgruppen oder substituierte Arylgruppen stehen.

2. Verfahren nach Anspruch 1, **dadurch gekennzeichnet, dass** das Übergangsmetall(II)salz die allgemeine Formel [MX₂] aufweist, wobei M für das Übergangsmetall steht und X vorzugsweise aus einem Anion der konjugierten Base einer organischen oder anorganischen Säure ausgewählt ist.

3. Verfahren nach Anspruch 1 oder 2, **dadurch gekennzeichnet, dass** der dimere Metallkomplex die allgemeine Formel (1) aufweist: 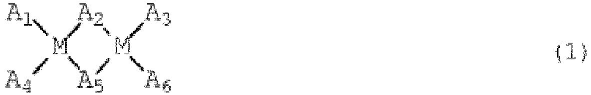 wobei M für das Übergangsmetall steht und A₁ bis A₆ für Liganden stehen.

4. Verfahren nach Anspruch 1 oder 2, **dadurch gekennzeichnet, dass** der dimere Metallkomplex die allgemeine Formel (2) aufweist:
[M(µ-X)X(L)]₂ (2)
wobei M für das Übergangsmetall steht, L für einen einzähnigen Phosphorliganden steht und X für das Anion der konjugierten Base einer organischen oder anorganischen Säure steht.

5. Verfahren nach einem der Ansprüche 1 bis 4, **dadurch gekennzeichnet, dass** es sich bei dem Übergangsmetall um Platin handelt.

6. Verfahren nach einem der Ansprüche 1 bis 5, **dadurch gekennzeichnet, dass** es sich bei den organischen Gruppen R₁, R₂ und R₃ des einzähnigen organischen Phosphinliganden L um substituierte Arylgruppen handelt.

7. Verfahren nach einem der Ansprüche 1 bis 6, **dadurch gekennzeichnet, dass** es sich bei den organischen Gruppen R₁, R₂ und R₃ des einzähnigen organischen Phosphinliganden L um Arylgruppen Ar handelt, die aus Phenyl, (cyclo)alkylsubstituierten Arylgruppen, alkoxysubstituierten Arylgruppen, mit Alkyl/Alkoxy gemischt substituierten Arylgruppen ausgewählt sind.

8. Verfahren nach Anspruch 7, **dadurch gekennzeichnet, dass** es sich bei R₁, R₂ und R₃ um Arylgruppen Ar handelt, die aus Phenyl, 4-Tolyl und 3,5-Xylyl oder mehrfach substituierten und vorzugsweise 3- & 5-substituierten Arylgruppen ausgewählt sind.

9. Verfahren nach einem der Ansprüche 1 bis 8, **dadurch gekennzeichnet, dass** es sich bei der Nitrilverbindung um eine organische Nitrilverbindung RCN handelt.

10. Verfahren nach einem der Ansprüche 1 bis 9, **dadurch gekennzeichnet, dass** das organische Lösungsmittel einen Siedepunkt von mindestens 105 °C aufweist.

11. Verfahren nach einem der Ansprüche 1 bis 10, **dadurch gekennzeichnet, dass** das Lösungsmittel aus 1,1,2,2-Tetrachlorethan, Xylolen, Monochlorbenzol oder Terpentin 140-200 ausgewählt ist.

12. Verfahren nach einem der Ansprüche 1 bis 11, **dadurch gekennzeichnet, dass** der Zeitraum in Schritt b) zwischen 12 Stunden und 40 Stunden beträgt.

13. Verfahren nach einem der Ansprüche 1 bis 12, **dadurch gekennzeichnet, dass** die Temperatur in Schritt b) zwischen 120 °C und 150 °C gehalten wird.

## Revendications

1. Procédé de synthèse de métal dimère de complexes de transition comprenant les étapes de
a) mélange d'un sel de métal de transition (II) avec un ligand L dans un solvant organique et
b) maintien du mélange à une température comprise entre 110 °C et 150 °C pendant une durée d'au moins 10 heures dans ledit solvant organique
**caractérisé en ce que** le mélange préparé dans l'étape a) comprend un composé nitrile ; et que le métal de transition est choisi parmi le nickel (Ni), le palladium (Pd) et/ou le platine (Pt) ; et que le ligand L est choisi parmi un ligand de phosphine organique monodentate ayant la formule suivante : 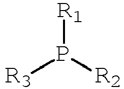 dans lequel R₁, R₂ et R₃ sont des groupes aryle ou des groupes aryle substitués.

2. Procédé selon la revendication 1 **caractérisé en ce que** le sel de métal de transition(II) a la formule générale [MX₂], dans laquelle M est le métal de transition et X est de préférence choisi parmi un anion de la base conjuguée d'un acide organique ou inorganique.

3. Procédé selon la revendication 1 ou 2 **caractérisé en ce que** le complexe de métal dimère a la formule générale (1) 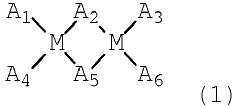 dans laquelle M est le métal de transition et A₁ à A₆ sont des ligands.

4. Procédé selon la revendication 1 ou 2 **caractérisé en ce que** le complexe de métal dimère a la formule générale (2)
[M(µ-X)X(L)]₂ (2)
dans laquelle M est le métal de transition, L est un ligand phosphoré monodentate et X est l'anion de la base conjuguée d'un acide organique ou inorganique.

5. Procédé selon l'une quelconque des revendications 1 à 4 **caractérisé en ce que** le métal de transition est le platine.

6. Procédé selon l'une quelconque des revendications 1 à 5 **caractérisé en ce que** les groupes organiques R₁, R₂ et R₃ du ligand de phosphine organique monodentate L sont des groupes aryle substitués.

7. Procédé selon l'une quelconque des revendications 1 à 6 **caractérisé en ce que** les groupes organiques R₁, R₂ et R₃ du ligand de phosphine organique monodentate L sont des groupes aryle Ar qui sont choisi parmi phényle, des groupes aryle substitués par (cyclo)alkyle, groupes aryle substitués par alcoxy, groupes aryle à substitution mixte par alkyle/alcoxy.

8. Procédé selon la revendication 7 **caractérisé en ce que** R₁, R₂ et R₃ sont des groupes aryle Ar choisis parmi phényle, 4-tolyle et 3,5-xylyle ou polysubstitués et, de préférence, des groupes aryle 3- et 5-substitués.

9. Procédé selon l'une quelconque des revendications 1 à 8 **caractérisé en ce que** le composé nitrile est un composé organique nitrile RCN.

10. Procédé selon l'une quelconque des revendications 1 à 9 **caractérisé en ce que** le solvant organique a un point d'ébullition d'au moins 105 °C.

11. Procédé selon l'une quelconque des revendications 1 à 10 **caractérisé en ce que** le solvant est choisi parmi le 1,1,2,2-tétrachloroéthane, le xylène, le monochlorobenzène ou la térébenthine 140-200.

12. Procédé selon l'une quelconque des revendications 1 à 11 **caractérisé en ce que** le temps dans l'étape b) est compris entre 12 heures et 40 heures.

13. Procédé selon l'une quelconque des revendications 1 à 12 **caractérisé en ce que** la température dans l'étape b) est maintenue entre 120 °C et 150 °C.
